(19) Europäisches Patentamt
European Patent Office
Office européen des brevets

(11) EP 0 558 980 B1

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.[6]: **C08F 2/30**, C04B 24/26

(21) Anmeldenummer: **93102290.9**

(22) Anmeldetag: **13.02.1993**

# (54) Wässrige Polymerisatdispersionen

Aqueous polymer dispersions

Dispersions aqueuses de polymères

(84) Benannte Vertragsstaaten:
**AT BE CH DE DK ES FR GB IT LI NL SE**

(30) Priorität: **29.02.1992 DE 4206429**
**05.08.1992 DE 4225864**

(43) Veröffentlichungstag der Anmeldung:
**08.09.1993 Patentblatt 1993/36**

(73) Patentinhaber: **BASF Aktiengesellschaft**
**D-67063 Ludwigshafen (DE)**

(72) Erfinder:
- **Daeumer, Bernd, Dr.**
  **W-6705 Deidesheim (DE)**
- **Dragon, Andree**
  **W-6720 Speyer (DE)**
- **Beckerle, Wilhelm Friedrich**
  **W-6712 Bobenheim-Roxheim (DE)**
- **Franzmann, Gernot, Dr.**
  **W-6719 Bobenheim (DE)**
- **Neutzner, Josef, Dr.**
  **W-6730 Neustadt (DE)**
- **Wistuba, Eckehardt, Dr.**
  **W-6702 Bad Duerkheim (DE)**
- **Pakusch, Joachim, Dr.**
  **W-6700 Ludwigshafen (DE)**
- **Angel, Maximilian, Dr.**
  **W-67105 Schifferstadt (DE)**

(56) Entgegenhaltungen:
**DE-A- 2 827 382** **FR-A- 2 031 313**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 558 980 B1

## Beschreibung

Die vorliegende Erfindung betrifft wäßrige Polymerisatdispersionen, die wenigstens ein durch radikalische Polymerisation erhältliches Polymerisat und, bezogen auf das wenigstens eine Polymerisat,

| | |
|---|---|
| a) 0,5 bis 3 Gew.-% | wenigstens eines aus Ethylenoxid und Propylenoxid aufgebauten Polyethers (Dispergiermittel a), |
| b) 0,5 bis 4 Gew.-% | wenigstens eines ethoxylierten Alkylphenols und/oder ethoxylierten Fettalkohols (Dispergiermittel b), |
| c) 0,5 bis 3 Gew.-% | wenigstens eines ethoxylierten Polysaccharids (Dispergiermittel c) und |
| d) 0 bis 4 Gew.-% | einer oder mehrerer Verbindungen aus der Gruppe umfassend Schwefelsäurehalbester ethoxylierter Alkylphenole und ethoxylierter Fettalkohole sowie deren wasserlösliche Salze (Dispergiermittel d) |

enthalten.

Ferner betrifft die vorliegende Erfindung das Verfahren zur Herstellung dieser wäßrigen Polymerisatdispersionen sowie deren Verwendung (in wäßriger oder sprühgetrockneter Form) als Zusatzmittel für mineralische Bindebaustoffe.

Die Verwendung wäßriger Polymerisatdispersionen, wobei die enthaltenen Polymerisate die unterschiedlichste Monomerenzusammensetzung aufweisen können, als Additiv für mineralische Bindebaustoffe ist bekannt.

Die DE-28 27 382 C2 empfiehlt beispielsweise wäßrige Polymerisatdispersionen auf der Basis von aromatischen Monomeren und/oder Estern der Acrylsäure als Additiv für mineralische Bindebaustoffe, insbesondere solchen auf Zementbasis. Hinsichtlich der zur Stabilisierung dieser wäßrigen Polymerisatdispersionen verwendeten Dispergiermittel schweigt sich die DE-28 27 382 C2 aus. Offensichtlich wird ihnen kein Einfluß auf die anwendungstechnischen Eigenschaften der mit diesen Polymerisatdispersionen modifizierten mineralischen Bindebaustoffe zugemessen. Eigene Untersuchungen haben jedoch ergeben, daß das in der wäßrigen Polymerisatdispersion enthaltene Dispergiermittel die anwendungstechnischen Eigenschaften der mit diesen Polymerisatdispersionen modifizierten mineralischen Bindebaustoffe sowohl im unverfestigten als auch im verfestigten Zustand beeinflußt.

Aus der japanischen Offenlegungsschrift 9257/81 ist bekannt, ein Monomerengemisch, bestehend aus 60 Gew.-% Vinylacetat und 40 Gew.-% VEOVA® 9-11 (VEOVA X ist ein Warenzeichen der Firma Shell und steht für Vinylester (von Carbonsäuren, die auch als Versatic® X-Säuren bezeichnet werden) der allgemeinen Formel I

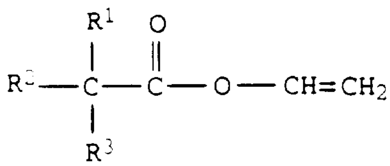

I ,

wobei $R^1$, $R^2$ und $R^3$ für Alkylreste stehen, deren Gesamtzahl an Kohlenstoffatomen ($R_1+R_2+R_3$) gleich X abzüglich 2 ist), nach dem Verfahren der radikalischen wäßrigen Emulsionspolymerisation in Gegenwart von Dispergiermittel und radikalischem Polymerisationsinitiator zu polymerisieren, wobei als Dispergiermittel ein Gemisch aus partiell verseiftem Polyvinylacetat und ethoxyliertem Polypropylenglykol eingesetzt wird, die so erhältliche wäßrige Polymerisatdispersion sprühzutrocknen und das dabei erhältliche redispergierbare Polymerisatpulver als Zusatzmittel für mineralische Bindebaustoffe auf Zementbasis einzusetzen. Nachteilig an diesen modifizierten mineralischen Bindebaustoffen auf Zementbasis ist jedoch, daß die daraus gefertigten Mörtel hinsichtlich ihrer anwendungstechnischen Eigenschaften nicht voll zu befriedigen vermögen.

FR-A-2031313 beschreibt wäßrige Dispersionen auf Basis von ungesättigte(n) Monomer(en) und polymerisierbaren ungesättigten Mono- oder Dicarbonsäuren. Die Dispersionen enthalten einen Emulgator der aus Kondensationsprodukten von Alkylphenol oder Fettalkohol und Ethylenoxid besteht.

Die Aufgabe der vorliegenden Erfindung bestand daher darin, wäßrige Polymerisatdispersionen auf der Basis von durch radikalische Polymerisation erhältlichen Polymerisaten zur Verfügung zu stellen, deren Dispergiermittel sich auf die anwendungstechnischen Eigenschaften der mit diesen wäßrigen Polymerisatdispersionen oder ihren durch Sprühtrocknung erhaltenen redispergierbaren Polymerisatpulvern modifizierten hydraulischen Bindemittel sowohl im verfestigten als auch im nicht verfestigten Zustand besonders vorteilhaft auswirkt.

Demgemäß wurden die eingangs definierten wäßrigen Polymerisatdispersionen gefunden.

Als Bausteine der durch radikalische Polymerisation erhältlichen Polymerisate kommen unter den radikalisch polymerisierbaren Monomeren unter anderen insbesondere monoethylenisch ungesättigte Monomere wie Olefine, z.B. Ethylen, Vinyl- und Vinylidenhalogenide wie Vinyl- und Vinylidenchlorid, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl, t-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf das Polymerisat, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der das Polymerisat aufbauenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl-Gruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren, unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat der Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Bevorzugte Klassen von Polymerisaten sind solche, die

- zu 50 bis 100 Gew.-% aus Estern aus 3 bis 6 C-Atome aufweisenden α,β-monoethylenisch ungesättigten Carbonsäuren und 1 bis 12 C-Atome aufweisenden Alkanolen und/oder vinylaromatischen Monomeren oder

- zu 50 bis 100 Gew.-% aus Styrol und/oder Butadien oder

- zu 50 bis 100 Gew.-% aus Estern des Vinylalkohols mit 1 bis 20 C-Atome aufweisenden Alkancarbonsäuren

aufgebaut sind.

Ganz besonders bevorzugt sind die beiden nachfolgenden Klassen A und B von Polymerisaten.

Bei der Klasse A handelt es sich um solche Polymerisate, die aus

a) 70 bis 100 Gew.-% wenigstens eines Monomeren aus der Gruppe umfassend Styrol, α-Methylstyrol, Vinyltoluole und Ester aus 3 bis 6 C-Atome aufweisenden α,β-monoethylenisch ungesättigten Carbonsäuren und 1 bis 12 C-Atome aufweisenden Alkanolen (Monomere Aa) und

b) 0 bis 30 Gew.-% sonstigen copolymerisierbaren Monomeren (Monomere Ab)

aufgebaut sind.

Bei der Klasse B handelt es sich um solche Polymerisate, die aus

a) 50 bis 80 Gew.-% wenigstens eines Esters aus Vinylalkohol und 1 bis 18 C-Atome aufweisenden unverzweigten Alkancarbonsäuren (Monomere Ba)

b) 5 bis 40 Gew.-% wenigstens eines Esters aus Vinylalkohol und 1 bis 20 C-Atome aufweisenden verzweigten Alkancarbonsäuren (Monomere Bb),

c) 0 bis 45 Gew.-% eines oder mehrerer Ester aus 3 bis 6 C-Atome aufweisenden α,β-monoethylenisch ungesättigten Carbonsäuren und 1 bis 18 C-Atome aufweisenden Alkanolen (Monomere Bc) und

d) 0 bis 5 Gew.-% sonstigen copolymerisierbaren Monomeren (Monomere Bd)

aufgebaut sind.

Als Monomere Aa werden mit Vorteil Styrol und Ester der Acryl- und/oder Methacrylsäure einpolymerisiert, unter denen die Ester mit 1 bis 8 C-Atomen aufweisenden Alkanolen bevorzugt sind. Besonders bevorzugt sind die entsprechenden Ester der Acrylsäure, unter welchen das n-Butylacrylat besonders vorteilhaft ist.

Geeignete Monomere Ab sind vor allem solche Monomere, die für sich polymerisiert Homopolymerisate mit erhöhter Wasserlöslichkeit ergeben. Beispiele hierfür sind Acryl- und Methacrylsäure sowie deren Amide, Vinylsulfonsäure, die wasserlöslichen Salze dieser Säuren sowie die Monoester der Acryl- und Methacrylsäure mit 2 bis 6 C-Atomen aufweisenden Alkandiolen, insbesondere diejenigen des 1,2-Ethandiols, des 1,2- und/oder 1,3-Propandiols und des 1,4-Butandiols, wobei die Monoester der Acrylsäure wiederum bevorzugt sind. In der Regel werden diese bisher genannten Monomere Ab insgesamt zu weniger als 10 Gew.-%, bezogen auf die Gesamtmenge der einpolymerisierten Monomeren, einpolymerisiert.

Weitere geeignete Monomere Ab sind Ester aus Vinylalkohol und 1 bis 18 C-Atome aufweisenden unverzweigten Alkancarbonsäuren, insbesondere Vinylacetat, Vinylpropionat, Vinyl-n-butyrat sowie Vinyllaurat. Ferner eignen sich als Monomere Ab zum Beispiel bis zu 5 C-Atome aufweisende Alkene oder auch mehrfach ungesättigte Kohlenwasserstoffe wie Butadien.

Besonders vorteilhaft ist das Polymerisat A wie folgt aufgebaut:

10 bis 70 Gew.-% n-Butylacrylat
30 bis 90 Gew.-% Styrol und
0 bis 10 Gew.-% Monomere Ab,

wobei hier als Monomere Ab insbesondere die Ester der Acrylsäure mit 1,2-Ethandiol, 1,2- und/oder 1,3-Propandiol und 1,4-Butandiol bevorzugt werden.

Ganz generell werden die Gewichtsanteile der Monomeren Aa und Ab mit Hilfe der Beziehung von Fox vorzugsweise so gewählt, daß ein aus diesen Monomeren aufgebautes Polymerisat A eine Glasübergangstemperatur Tg von -45 bis 100, vorzugsweise -15 bis 80 und ganz besonders bevorzugt 10 bis 70°C aufweist.

Nach Fox (T.G. Fox, Bull. Am. Phys. Soc. (Ser. II) 1, 123 [1956]) gilt für die Glasübergangstemperatur Tg von Mischpolymerisaten in guter Nährung:

$$\frac{1}{Tg} = \frac{X^1}{Tg^1} + \frac{X^2}{Tg^2} + ..... \frac{X^n}{Tg^n},$$

wobei $X^1$, $X^2$, ....., $X^n$ die Massenbrüche 1, 2, ...., n und $Tg^1$, $Tg^2$, ....., $Tg^n$ die Glasübergangstemperaturen der jeweils nur mit einem der Monomeren 1, 2, ..., n aufgebauten Polymeren in Grad Kelvin bedeuten. Die Glasübergangstemperaturen dieser Homopolymerisate der oben aufgeführten Monomeren Aa, Ab sind bekannt und z.B. in J. Brandrup, E. H. Immergut, Polymer Handbook 1st Ed.

J. Wiley, New York, 1966 und 2nd Ed. J. Wiley, New York, 1975 aufgeführt.

Als Monomere Ba werden mit Vorteil Vinylacetat, Vinylpropionat, Vinyl-n-butyrat und Vinyllaurat einpolymerisiert, unter denen das Vinylpropionat ganz besonders bevorzugt ist. Geeignete Monomere Bb sind insbesondere Vinylester von Versaticsäuren, unter denen VEOVA 9 und 10 bevorzugt sind.

Von den Monomeren Bc werden mit Vorteil Ester der Acryl- und Methacrylsäure einpolymerisiert, unter denen die Ester der Acrylsäure bevorzugt sind. Besonders bevorzugte Monomere Bc sind Ethylacrylat, n-Butyl- und tert.-Butylacrylat, n-Hexylacrylat, 2-Ethylhexylacrylat, Laurylacrylat und Stearylacrylat.

Als Monomere Bd kommen insbesondere solche Monomeren in Betracht, die für sich polymerisiert Homopolymerisate mit erhöhter Wasserlöslichkeit ergeben. Beispiele hierfür sind Acryl- und Methacrylsäure sowie deren Amide, Vinylsulfonsäure und die wasserlöslichen Salze dieser Säuren.

Die Gewichtsanteile der Monomeren Ba bis Bd werden, bezogen auf die Gesamtmenge der zu polymerisierenden Monomeren B, mit Hilfe der Beziehung von Fox vorzugsweise so gewählt, daß ein aus diesen Monomeren aufgebautes Polymerisat B eine Glasübergangstemperatur von -30 bis +50°C aufweist.

Die Glasübergangstemperaturen der Homopolymerisate der oben aufgeführten Monomeren Ba bis Bd sind in gleicher Weise wie diejenigen der Monomeren A bekannt.

Bevorzugt sind solche erfindungsgemäßen wäßrigen Polymerisatdispersionen, die entweder ausschließlich Polymerisate A oder ausschließlich Polymerisate B enthalten.

Das zahlenmittlere Molekulargewicht der Dispergiermittel a beträgt vorzugsweise 250 bis 20000 und besonders bevorzugt 1000 bis 10000. Mit Vorteil handelt es sich um Polyether die Ethylenoxid (EO) und Propylenoxid (PO) im molaren Verhältnis EO:PO von 0,05 bis 20, bevorzugt 0,1 bis 10, einpolymerisiert enthalten. Ganz besonders bevorzugte Dispergiermittel a sind dabei solche, die Blockcopolymere aus EO und PO sind, unter denen wiederum jene besonders vorteilhaft sind, die einen Polypropylenglykolblock enthalten, der von zwei Polyethylenglykolblöcken flankiert wird, wobei die beiden Polyethylenglykolblöcke vorzugsweise die gleiche mittlere Länge aufweisen. Entsprechende Polyether sind im Handel erhältlich.

Die Alkylgruppe der als Dispergiermittel b geeigneten ethoxylierten Alkylphenole weist mit Vorteil 2 bis 15, vorzugsweise 5 bis 10 C-Atome auf. Besonders bevorzugt sind verzweigte Alkylgruppen aufweisende ethoxylierte Alkylphenole, wobei die ethoxylierten Isoalkylphenole von besonderem Vorteil sind und unter diesen wiederum ethoxyliertes Isooctylphenol bevorzugt wird. Besonders geeignete Ethoxylierungsgrade sind solche von 10 bis 50, vorzugsweise solche von 20 bis 30.

Der Alkylrest der als Dispergiermittel b geeigneten ethoxylierten Fettalkohole enthält mit Vorteil 8 bis 26 C-Atome. Mit besonderem Vorteil beträgt die Zahl der Kohlenstoffatome 12 bis 18. Der EO-Grad dieser ethoxylierten Fettalkohole liegt vorzugsweise im Bereich 2 bis 80 und beträgt mit besonderem Vorteil 15 bis 30. Die Dispergiermittel b sind an sich ebenfalls bekannt und im Handel käuflich erwerblich.

Als ethoxylierte Polysaccharide kommen ethoxylierte Stärke, Glykogen und Cellulose in Betracht. Ein besonders geeignetes Dispergiermittel c ist ethoxylierte Cellulose, die, bezogen auf die drei Hydroxylgruppen jeder Anhydroglukose-Einheit der Ausgangscellulose, vorzugsweise einen mittleren Ethoxylierungsgrad von 1,5 bis 3,5 aufweist (man spricht auch vom mittleren Substitutionsgrad von 1,5 bis 3,5) und deren zahlenmittleres Molekulargewicht vorteilhaft $5 \cdot 10^3$ bis $1 \cdot 10^5$ beträgt. Derartige Cellulosen sind gleichsfalls im Handel käuflich zu erweben. Beispiele dafür sind die Natrosol®-Typen der Fa. Hercules.

Bei den Dispergiermitteln d handelt es sich vorzugsweise um die Schwefelsäurehalbester (und deren wasserlösliche Salze) der Dispergiermittel b.

Vorzugsweise werden keine Dispergiermittel d mitverwendet.

Ferner enthalten die erfindungsgemäßen wäßrigen Polymerisatdispersionen neben den Dispergiermitteln a) bis d) vorzugsweise keine weiteren Dispergiermittel.

Zweckmäßigerweise erfolgt die Herstellung der erfindungsgemäßen wäßrigen Polymerisatdispersionen nach dem Verfahren der radikalischen wäßrigen Emulsionspolymerisation in Gegenwart von Dispergiermittel und radikalischem Polymerisationsinitiator. Vorzugsweise mit der Maßgabe, daß das Dispergiermittel, bezogen auf das zu polymerisierende Monomerengemisch, ausschließlich zusammengesetzt ist aus

a) 0,5 bis 3 Gew.-% wenigstens eines aus Ethylenoxid und Propylenoxid aufgebauten Polyethers (Dispergiermittel a),

b) 0,5 bis 4 Gew.-% wenigstens eines ethoxylierten Alkylphenols und/oder ethoxylierten Fettalkohols (Dispergiermittel b),

c) 0,5 bis 3 Gew.-% wenigstens eines ethoxylierten Polysaccharids (Dispergiermittel c) und

d) 0 bis 4 Gew.-% einer oder mehrerer Verbindungen aus der Gruppe umfassend Schwefelsäurehalbester ethoxylierter Alkylphenole und ethoxylierter Fettalkohole sowie deren wasserlösliche Salze (Dispergiermittel d).

Die insgesamt eingesetzte Menge an Dispergiermitteln a bis d beträgt, bezogen auf die Gesamtmenge der zu polymerisierenden Monomeren, vorzugsweise $\leq$ 7 Gew.-%. Mit besonderem Vorteil beträgt sie, in gleicher Weise bezogen, 2 bis 7 und ganz besonders bevorzugt 4 bis 6 Gew.-%.

Die radikalische wäßrige Emulsionspolymerisation kann in an sich bekannter Weise durchgeführt werden. Die Polymerisationstemperatur beträgt üblicherweise 0 bis 100, vorzugsweise 20 bis 90°C.

Als wasserlösliche Polymerisationsinitiatoren können vor allem Peroxidisulfate wie Natriumperoxidisulfat oder kombinierte Systeme, die ein Reduktionsmittel und ein Peroxid enthalten, z.B. Formaldehydnatriumsulfoxylat/Wasserstoffperoxid oder Formaldehydnatriumsulfoxylat/tert.-Butylhydroperoxid in Betracht. In der Regel werden, bezogen auf die Gesamtmenge der zu polymerisierenden Monomeren, 0,2 bis 5 Gew.-% an Polymerisationsinitiatoren eingesetzt. Ferner ist es von Vorteil, die Polymerisation in Gegenwart von das Molekulargewicht regelnden Mitteln wie Butenol oder SH-Gruppen enthaltenden Verbindungen wie Mercaptoethanol, 2-Ethylhexylthioglykolat, Thioglykolsäure oder tert.-Dodecylmercaptan durchzuführen, wobei die Verwendung von tert.-Dodecylmercaptan ganz besonders vorteilhaft ist. Die Einsatzmengen solcher Molekulargewichtsregler betragen in der Regel 0,01 bis 1 Gew.-%, bezogen auf die zu polymerisierenden Monomeren. Das zahlenmittlere Molekulargewicht der so resultierenden Dispersionspolymerisate liegt normalerweise im Bereich $5 \cdot 10^3$ bis $2 \cdot 10^6$. Vorzugsweise wird die radikalische wäßrige Emulsionspolymerisation in einem sauren Polymerisationsmedium ausgeführt, wobei der pH-Wert unter Mitverwendung von Puffersystemen wie Natriumacetat kontrolliert werden kann. Die Durchführung der Polymerisation kann als Batchprozess oder in Form eines Zulaufverfahrens durchgeführt werden. Bevorzugt ist das Zulaufverfahren, bei dem man einen Teil des Polymerisationsansatzes vorlegt, auf die Polymerisationstemperatur erwärmt und anschließend den Rest in getrennten Zuläufen, von denen einer die Monomeren in reiner oder in emulgierter Form enthält, halb- oder kontinuierlich zuführt. Die Zufuhr der Monomeren als wäßrige Emulsion wird bevorzugt, wobei mit Vorteil so verfahren wird, daß zum Emulgieren der Monomeren die Dispergiermittel a und b verwendet werden. Werden Molekulargewichtsregler mitverwendet, werden diese vorzugsweise ebenfalls als Bestandteil der wäßrigen Monomeremulsion zugeführt. Nach Beendigung der eigentlichen Polymerisation wird häufig noch unter Zusatz weiteren Polymerisationsinitiators zum Zweck der Restmonomerenreduktion nachpolymerisiert.

Anschließend stellt man die fertige Dispersion, deren Feststoffgehalt vorzugsweise 40 bis 70 Gew.-% beträgt, vorzugsweise auf pH 8 bis 9 ein, wobei zur pH-Regulierung mit Vorteil eine wäßrige Calciumhydroxid-Aufschlämmung verwendet wird. Bemerkenswerterweise kann die fertige Dispersion jedoch auch unmittelbar in saurer Form den insbesondere Zement enthaltenden mineralischen Bindebaustoffen zugesetzt werden, ohne daß wesentliche Koagulatbildung erfolgt.

Die erfindungsgemäßen Polymerisatdispersionen können in an sich bekannter Weise sprühgetrocknet werden (vgl. z.B. DE-A-39 23 229, EP-A-78 449, DE-A-22 38 903, EP-A-56 622 und DE-A-33 44 242) und eignen sich sowohl in wäßriger Form, als auch in Form des redispergierbaren sprühgetrockneten Polymerisatpulvers in vorteilhafter Weise als Zusatzmittel für mineralische Bindebaustoffe. Als solche werden Zubereitungen zusammengefaßt, die als wesentliche Bestandteile mineralische Bindemittel wie Zement, Kalk oder Gips sowie als Zuschläge dienende Sande, Kiese oder gebrochene Gesteine enthalten und die nach dem Anmachen mit Wasser an der Luft, teilweise auch unter Wasser, erstarren und erhärten (verfestigen).

Durch Zusatz der erfindungsgemäßen Dispersionspolymerisate werden (überraschenderweise trotz der teilweise hohen Tg der Dispersionspolymerisate) verfestigte Baustoffmassen erhalten, die insbesondere eine erhöhte Biegezugfestigkeit aufweisen. Weitere bemerkenswerte Eigenschaften von mit den erfindungsgemäßen wäßrigen Polymerisatdispersionen modifizierten mineralischen Bindebaustoffen sind die gute Verarbeitbarkeit der noch nicht verfestigten Mörtel, insbesondere deren erhöhte Haftung, weshalb die so modifizierten mineralischen Bindebaustoffe vor allem als Reparaturmassen geeignet sind. Von besonderem Vorteil ist dabei, daß die Mörtelverfestigung durch den Dispersionszusatz nicht wesentlich verzögert wird und ein vorteilhaftes Schwundverhalten aufweist. Hinsichtlich der letztgenannten Eigenschaften wirkt sich insbesondere das erfindungsgemäß zu verwendende Dispergiermittel vorteilhaft aus.

Mit Vorteil eignen sich die erfindungsgemäßen Dispersionspolymerisate als Zusatzmittel für Bindebaustoffe auf Zementbasis, wobei die Verträglichkeit weitgehend unabhängig von der Zementart ist. Je nach Vorhaben können beispielsweise Hochofenzement, Ölschieferzement, hydrophobierter Portlandzement, Schnellzement, Quellzement, Tonerdezement und besonders bevorzugt Portlandzement verwendet werden.

Zur Herstellung einer möglichen Verkaufsform modifizierter mineralischer Bindebaustoffe werden zweckmäßigerweise das mineralische Bindemittel (z.B. Zement), die als Zuschläge dienenden Sande, Kiese oder gebrochenen Gesteine sowie das sprühgetrocknete Dispersionspolymerisatpulver miteinander gemischt. Das Gewichtsverhältnis Polymerisatpulver/mineralisches Bindemittel wird dabei vorzugsweise so gewählt, daß es im Bereich von 0,05 bis 0,20 liegt. Durch Anrühren der Verkaufsform mit Wasser wird die Gebrauchsform (Mörtel oder Beton) erhalten. Die Wassermenge wird mit Vorteil so bemessen, daß sich ein Wasser/Zement-Gewichtsverhältnis von 0,42 bis 0,55 ergibt. Selbstverständlich läßt sich die Gebrauchsform unmittelbar erhalten, wenn man das Dispersionspolymerisat als wäßrige Dispersion zugibt. Typische, für Reperaturmörtel geeignete Trockenformen enthalten:

| | |
|---|---|
| 50 bis 70 Gew.-Teile | Sand (arithmetisches Mittel der Korngrößtdurchmesser im Bereich 0,06 bis 3 mm) |
| 20 bis 30 Gew.-Teile | Zement |
| 0 bis 2 Gew.-Teile | Thixotropierungsmittel (z.B. Elkem-Mikrosilica), |
| 0 bis 0,3 Gew.-Teile | Fasern, |
| 0,1 bis 1,0 Gew.-Teile | Entschäumer und |
| 0 bis 1 Gew.-Teile | Verflüssiger, |

sowie das Dispersionspolymerisat im Gewichtsverhältnis Polymerisat/Zement = 0,05 bis 0,20. Der Zusatz des Thixotropierungsmittels dient dem Zweck, die Fließfähigkeit des wäßrigen Mörtels vor seiner Verfestigung im Ruhezustand zu erhöhen.

## Beispiele

### Beispiel 1

Herstellung erfindungsgemäßer wäßriger Polymerisatdispersionen D1 bis D3.
Ein Gemisch aus

| | |
|---|---|
| 150 g | Wasser |
| 7,5 g | einer 20 gew.-%igen wäßrigen Lösung von ethoxyliertem Talgfettalkohol (EO-Grad: 22) und |
| 38,7 g | Zulauf 1 |

wurde auf 90°C erhitzt und auf einmal mit 10,3 g von Zulauf 2 versetzt. 15 min danach wurden die verbliebenen Mengen an Zulauf 1 (innerhalb von 120 min) und an Zulauf 2 (innerhalb von 150 min) zeitlich beginnend unter Aufrechterhaltung der 90°C kontinuierlich zugeführt. Anschließend wurde das Reaktionsgemisch noch 120 min bei 90°C gerührt und sodann zur Nachpolymerisation auf einmal mit einer Lösung von 1,0 g tert.-Butylhydroperoxid in 5,4 g Wasser und einer Lösung von 0,5 g Natriumformaldehydsulfoxylat in 5 g Wasser versetzt und 15 min unter Rühren sich selbst überlassen. Danach wurde auf Raumtemperatur abgekühlt und mit 3,5 ml einer 20 gew.-%igen wäßrigen Calciumhydroxid-Aufschlämmung ein pH-Wert von ca. 8,5 eingestellt.

Zulauf 1

| | |
|---|---|
| 137 g | Wasser |
| 500 g | Monomermischung |
| 5 g | Polyethylenoxid-Propylenoxid-Blockcopolymer mit einem molaren EO-PO-Verhältnis von 0,7 und einem zahlenmittleren Molekulargewicht von 3200 |
| 100 g | einer 5 gew.-%igen wäßrigen Lösung einer ethoxylierten Cellulose (Natrosol™ 250 LR) |
| 300 g | einer 20 gew.-%igen wäßrigen Lösung von ethoxyliertem Talgfettalkohol (EO-Grad: 22) und |
| 1,0 g | tert.-Dodecylmercaptan |

Zulauf 2

| | |
|---|---|
| 100 g | Wasser |
| 2,5 g | Natriumperoxidisulfat |

Monomerenzusammensetzungen:

| | |
|---|---|
| D1: | 38 Gew.-% n-Butylacrylat, 62 Gew.-% Styrol |
| D2: | 47 Gew.-% n-Butylacrylat, 50 Gew.-% Styrol, 3 Gew.-% Hydroxypropylacrylat |
| D3: | 50 Gew.-% n-Butylacrylat, 50 Gew.-% Styrol |

### Beispiel 2

Herstellung erfindungsgemäßer wäßriger Polymerisatdispersionen D4 bis D6
Ein Gemisch aus

| | |
|---|---|
| 500 g | Wasser, |
| 2,5 g | Natriumacetat, |
| 2,5 g | Butenol und |
| 10 g | einer ethoxylierten Cellulose (Natrosol™ 250 GR) |

wurde auf 80°C erhitzt und auf einmal mit 150 g des Zulaufs und danach auf einmal mit 10 g einer wäßrigen Lösung von 5 g Natriumperoxidisulfat in 100 g Wasser versetzt. Anschließend wurden die verbliebene Menge Zulauf (innerhalb von 3 h) und die verbliebene Menge Peroxidlösung (innerhalb von 3,5 h) zeitgleich beginnend unter Aufrechterhaltung der 80°C kontinuierlich zugeführt. Danach wurde das Reaktionsgemisch noch 1 h bei 80°C gerührt.

Zulauf:

343 g Wasser,
1000 g Monomermischung,
10 g Polyethylenoxid-Polypropylenoxid-Blockcopolymer mit einem molaren EO:PO Verhältnis von 0,7 und einem zahlenmittleren Molekulargewicht von 3200 und
150 g einer 20 gew.-%igen wäßrigen Lösung von ethoxyliertem p-Isooctylphenol (EO-Grad: 25).

Monomerenzusammensetzungen:

D4: 60 Gew.-% Vinylpropionat, 40 Gew.-% VEOVA 9;
D5: 60 Gew.-% Vinylpropionat, 30 Gew.-% VEOVA 9, 10 Gew.-% tert.-Butylacrylat;
D6: 60 Gew.-% Vinylpropionat, 20 Gew.-% VEOVA 9, 20 Gew.-% tert.-Butylacrylat;

Beispiel 3

Anwendungstechnische Prüfungen von mit den Dispersionen D1 bis D3 modifizierten Zementmörteln

a) Bestimmung der Frühfestigkeiten einer Mörtelmasse gemäß DIN 1164, Teil 7
Zusammensetzung der Mörtelmasse:

217 g Quarzsand gemäß DIN 1164, Teil 7 der Korngruppe 0,08 bis 0,5 mm
434 g Quarzsand gemäß DIN 1164, Teil 7 der Korngruppe 0,5 bis 1,0 mm
217 g Portlandzement 35 F
86,5 g Wasser
1 g handelsüblicher Entschäumer und
44 g einer der Dispersionen D1 bis D3 aus Bsp. 1.

Aus den frisch gefertigten Mörtelmassen wurden gemäß DIN 1164, Teil 7 als Probekörper Mörtelprismen angefertigt, die wie in DIN 1164, Teil 7 gelagert und nach 24 h gemäß DIN 1164, Teil 7 auf Biegezug- und Druckfestigkeit geprüft wurden. Die Ergebnisse zeigt Tabelle 1, wobei die Ergebniswerte als Relativwerte, d.h. als auf das Ergebnis für eine Mörtelmasse ohne Dispersionszusatz (zu deren Herstellung anstelle der 86,5 g Wasser jedoch 108,5 g Wasser eingesetzt wurden) normierte Werte, angegeben sind.

Tabelle 1

| | Biegezugfestigkeit | Druckfestigkeit |
|---|---|---|
| D1 | 0,83 | 0,87 |
| D2 | 0,89 | 0,73 |
| D3 | 1 | 0,79 |
| ohne D | 1 | 1 |

Die Ergebnisse weisen aus, daß die Mörtelverfestigung durch den Dispersionszusatz nicht wesentlich verzögert wird.
b) Bestimmung der Biegezugendfestigkeiten einer Mörtelmasse gemäß DIN 1164, Teil 7

Wie a), die Probekörper wurden jedoch 28 Tage gelagert. Die Ergebnisse zeigt Tabelle 2.

Tabelle 2

| | Biegezugfestigkeit (N/mm$^2$) |
|---|---|
| D1 | 8,8 |
| D2 | 9,2 |

Fortsetzung der Tabelle auf der nächsten Seite

Tabelle 2 (fortgesetzt)

| | Biegezugfestigkeit (N/mm$^2$) |
|---|---|
| D3 | 8,6 |
| ohne D | 7,0 |

Tabelle 2 weist aus, daß die Biegezugendfestigkeiten bei Dispersionszusatz erhöht sind.

Beispiel 4

Anwendungstechnische Prüfung von mit den Dispersionen D4 bis D6 modifizierten Zementmörteln

a) Bestimmung der Frühfestigkeiten einer Mörtelmasse gemäß DIN 1164, Teil 7
Zusammensetzung der Mörtelmasse:

217 g Quarzsand gemäß DIN 1164, Teil 7 der Korngruppe 0,08 bis 0,5 mm,
434 g Quarzsand gemäß DIN 1164, Teil 7 der Korngruppe 0,5 bis 1,0 mm,
217 g Portlandzement 35 F,
75,6 g Wasser,
1 g handelsüblicher Entschäumer und
44 g einer der Dispersionen D4 bis D6 aus Bsp. 2.

Aus den frisch gefertigten Mörtelmassen wurden gemäß DIN 1164, Teil 7 als Probekörper Mörtelprismen angefertigt, die wie in DIN 1164, Teil 7 gelagert wurden und nach 24 h gemäß DIN 1164, Teil 7 auf Biegezug- und Druckfestigkeit geprüft wurden. Die Ergebnisse zeigt Tabelle 3. Zum Vergleich enthält sie auch das Ergebnis für eine Mörtelmasse ohne Dispersionszusatz, zu deren Herstellung anstelle der 75,6 g Wasser jedoch 108,5 g Wasser eingesetzt wurden.

Tabelle 3

| | Biegezugfestigkeit (N/mm$^2$) | Druckfestigkeit (N/mm$^2$) |
|---|---|---|
| D4 | 4,23 | 18,6 |
| D5 | 4,07 | 18,1 |
| D6 | 4,41 | 19,0 |
| ohne D | 4,29 | 24,4 |

Die Ergebnisse weisen aus, daß die Mörtelverfestigung durch den Dispersionszusatz nicht wesentlich verzögert wird.

b) Bestimmung der Endfestigkeiten einer Mörtelmasse gemäß DIN 1164, Teil 7
Wie a), die Probekörper wurden jedoch 28 Tage gelagert. Die Ergebnisse zeigt Tabelle 4

Tabelle 4

| | Biegezugfestigkeit (N/mm$^2$) | Druckfestigkeit (N/mm$^2$) |
|---|---|---|
| D4 | 9,8 | 41,2 |
| D5 | 10,0 | 40,3 |
| D6 | 10,0 | 42,3 |
| ohne D | 7,2 | 38,3 |

Tabelle 4 weist aus, daß die Endfestigkeiten bei Dispersionszusatz erhöht sind.

c) Bestimmung des Schwundverhaltens eines Reparaturmörtels nach DIN 52450

Zusammensetzung der Mörtelmasse:

180 g Quarzsand Körnung 0,063 bis 0,4 mm,
140 g Quarzsand Körnung 0,15 bis 0,6 mm,
180 g Quarzsand Körnung 0,5 bis 1,25 mm,
93 g Quarzsand Körnung 1,5 bis 3,0 mm,
239 g Portlandzement 35 F,
18 g Mikrosilica (Fa. Elkem Chemicals, Allensbach, BRD),
3 g Dralonfasern (dtex 6,7/4 mm),
1 g Entschäumer,
98 g Wasser und
48 g einer der Dispersionen D4 bis D6 aus Bsp. 2.

Die Schwundwerte wurden nach DIN 52450 bestimmt (Lagerung in Raumluft: Normalklima 23/50-2 gemäß DIN 50014) und sind in Tabelle 5 ausgewiesen. Für den Vergleichsversuch ohne Dispersionszusatz wurden hier anstelle 98 g Wasser 122 g Wasser eingesetzt.

Tabelle 5

| | Schwund [mm/m], nach 28 Tagen |
|---|---|
| D4 | - 0,8 |
| D5 | - 0,7 |
| D6 | - 0,8 |
| ohne D | - 1,2 |

Die Tabelle weist aus, daß durch den Dispersionszusatz der Schwund gemindert wird.

Beispiel 5

Vergleich mit nächstliegendem Stand der Technik

a) Nacharbeitung von Beispiel 2 der JP-OS 9257/81 zur Herstellung einer Vergleichsdispersion DV
Ein Gemisch aus

1243,5 g Wasser
400,0 g einer 25 gew.-%igen wäßrigen Lösung von Polyvinylacetat, dessen Estergruppen zu 88 mol-% verseift sind (Mowiol® 04-88) und
40,0 g einer 25 gew.-%igen wäßrigen Lösung eines Polyethylenoxid-Polypropylenoxid-Blockcopolymer mit einem molaren EO:PO Verhältnis von 0,7 und einem zahlenmittleren Molekulargewicht von 3200

wurde auf 80°C erhitzt und auf einmal mit 100 g des Zulaufs und danach mit 10 g einer wäßrigen Lösung von 5 g Ammoniumperoxidisulfat in 100 g Wasser versetzt. Anschließend wurden die verbliebene Menge Zulauf (innerhalb von 3 h) und die verbliebene Menge Peroxidlösung (innerhalb von 3,5 h) zeitgleich beginnend unter Aufrechterhaltung der 80°C kontinuierlich zugeführt.Danach wurde das Reaktionsgemisch noch 1 h bei 80°C gerührt.

Zulauf: 600 g Vinylacetat und
400 g VEOVA 10

b) Herstellung einer mit DV zu vergleichenden erfindungsgemäßen wäßrigen Polymerisatdispersion D7
Ein Gemisch aus

1331,5 g Wasser
10,0 g einer ethoxylierten Cellulose (Natrosol™ 250 GR)
40,0 g einer 25 gew.-%igen wäßrigen Lösung eines Polyethylenoxid-Polypropylenoxid-Blockcopolymer mit einem molaren EO:PO Verhältnis von 0,7 und einem zahlenmittleren Molekulargewicht von 3200 und
150,0 g einer 20 gew.-%igen wäßrigen Lösung von ethoxyliertem p-Isooctylphenol (EO-Grad 25)

wurde auf 80°C erhitzt und auf einmal mit 100 g des Zulaufs und danach mit 10 g einer wäßrigen Lösung von 5 g Ammoniumperoxidisulfat in 100 g Wasser versetzt. Anschließend wurden die verbliebene Menge Zulauf (innerhalb von 3 h) und die verbliebene Menge Peroxidlösung (innerhalb von 3,5 h) zeitgleich beginnend unter Aufrechterhaltung der 80°C kontinuierlich zugeführt. Danach wurde das Reaktionsgemisch noch 1 h bei 80°C gerührt.

Zulauf: 600 g Vinylacetat und
400 g VEOVA 10

c) Bestimmung der Frühfestigkeiten von unter Zusatz von DV bzw. D7 zubereiteten Mörtelmassen gemäß DIN 1164, Teil 7

Die Mörtelmassen wurden gemäß der Rezeptur in Bsp. 4a) zubereitet, wobei die zugesetzte Menge Wasser jedoch so abgeändert wurde, daß der zubereitete Mörtel im wesentlichen dasselbe Wasser/Zement-Gewichtsverhältnis (W/Z) wie in Bsp. 4a) aufwies. Anschließend wurden sie in gleicher Weise wie in Bsp. 4a) auf Frühfestigkeit geprüft. Die Ergebnisse zeigt Tabelle 6.

Tabelle 6

| | W/Z | Biegezugfestigkeit ($N/mm^2$) | Druckfestigkeit ($N/mm^2$) |
|---|---|---|---|
| DV | 0,48 | 2,22 | 7,3 |
| D7 | 0,45 | 3,36 | 13,0 |

Die Ergebnisse weisen aus, daß die Mörtelverfestigung bei Verwendung einer wäßrigen Polymerisatdispersion gemäß nächstliegendem Stand der Technik stärker verzögert wird, als bei Verwendung der entsprechenden erfindungsgemäßen wäßrigen Polymerisatdispersion.

**Patentansprüche**

**1.** Wäßrige Polymerisatdispersionen, die wenigstens ein durch radikalische Polymerisation erhältliches Polymerisat und, bezogen auf das wenigstens eine Polymerisat,

a) 0,5 bis 3 Gew.-% wenigstens eines aus Ethylenoxid und Propylenoxid aufgebauten Polyethers (Dispergiermittel a),

b) 0,5 bis 4 Gew.-% wenigstens eines ethoxylierten Alkylphenols und/oder ethoxylierten Fettalkohols (Dispergiermittel b),

c) 0,5 bis 3 Gew.-% wenigstens eines ethoxylierten Polysaccharids (Dispergiermittel c) und

d) 0 bis 4 Gew.-% einer oder mehrerer Verbindungen aus der Gruppe umfassend Schwefelsäurehalbester ethoxylierter Alkylphenole und ethoxylierter Fettalkohole sowie deren wasserlösliche Salze (Dispergiermittel d)

enthalten.

**2.** Wäßrige Polymerisatdispersion nach Anspruch 1, deren Polymerisat aus

a) 70 bis 100 Gew.-% wenigstens eines Monomeren aus der Gruppe umfassend Styrol, $\alpha$-Methylstyrol, Vinyltoluole und Ester aus 3 bis 6 C-Atome aufweisenden $\alpha,\beta$-monoethylenisch ungesättigten Carbonsäuren und 1 bis 12 C-Atome aufweisenden Alkanolen (Monomere Aa) und
b) 0 bis 30 Gew.-% sonstigen copolymerisierbaren Monomeren (Monomere Ab)

aufgebaut ist.

**3.** Wäßrige Polymerisatdispersion nach Anspruch 1, deren Polymerisat aus

a) 50 bis 80 Gew.-% wenigstens eines Esters aus Vinylalkohol und 1 bis 18 C-Atome aufweisenden unverzweigten Alkancarbonsäuren (Monomere Ba)
b) 5 bis 40 Gew.-% wenigstens eines Esters aus Vinylalkohol und 1 bis 20 C-Atome aufweisenden verzweigten Alkancarbonsäuren (Monomere Bb),
c) 0 bis 45 Gew.-% eines oder mehrerer Ester aus 3 bis 6 C-Atome aufweisenden α,β-monoethylenisch ungesättigten Carbonsäuren und 1 bis 18 C-Atome aufweisenden Alkanolen (Monomere Bc) und
d) 0 bis 5 Gew.-% sonstigen copolymerisierbaren Monomeren (Monomere Bd)

aufgebaut ist.

**4.** Wäßrige Polymerisatdispersionen nach den Ansprüchen 1 bis 3, deren Dispergiermittel a ein zahlenmittleres Molekulargewicht von 250 bis 20 000 aufweist und Ethylenoxid (EO) und Propylenoxid (PO) im molaren Verhältnis EO: PO von 0,05 bis 20 einpolymerisiert enthält.

**5.** Wäßriges Polymerisatdispersionen nach den Ansprüchen 1 bis 4, deren Dispergiermittel b ethoxyliertes Isooctylphenol mit einem Ethoxylierungsgrad von 10 bis 50 und/oder ethoxylierter Fettalkohol mit einem Ethoxylierungsgrad von 8 bis 26 ist.

**6.** Wäßrige Polymerisatdispersionen nach den Ansprüchen 1 bis 5, deren Dispergiermittel c ethoxylierte Cellulose ist.

**7.** Wäßrige Polymerisatdispersionen nach den Ansprüchen 1 bis 6, deren Dispergiermittel höchstens die Dispergiermittel a bis d umfaßt und dies, bezogen auf das Polymerisat, in einer Gesamtmenge von 2 bis 7 Gew.-%.

**8.** Verfahren zur Herstellung wäßriger Polymerisatdispersionen gemäß Anspruch 1, dadurch gekennzeichnet, daß man ein Gemisch radikalisch polymerisierbarer Monomere nach dem Verfahren der radikalischen wäßrigen Emulsionspolymerisation in Gegenwart von Dispergiermittel und radikalischem Polymerisationsinitiator mit der Maßgabe polymerisiert, daß das Dispergiermittel, bezogen auf das zu polymerisierende Monomerengemisch, zusammengesetzt ist aus

a) 0,5 bis 3 Gew.-% wenigstens eines aus Ethylenoxid und Propylenoxid aufgebauten Polyethers (Dispergiermittel a),

b) 0,5 bis 4 Gew.-% wenigstens eines ethoxylierten Alkylphenols und/oder ethoxylierten Fettalkohols (Dispergiermittel b),

c) 0,5 bis 3 Gew.-% wenigstens eines ethoxylierten Polysaccharids (Dispergiermittel c) und

d) 0 bis 4 Gew.-% einer oder mehrerer Verbindungen aus der Gruppe umfassend Schwefelsäurehalbester ethoxylierter Alkylphenole und ethoxylierter Fettalkohole sowie deren wasserlösliche Salze (Dispergiermittel d).

**9.** Verwendung wäßriger Polymerisatdispersionen gemäß den Ansprüchen 1 bis 7, in wäßriger oder sprühgetrockneter Form, als Zusatzmittel für mineralische Bindebaustoffe.

**10.** Mineralische Bindebaustoffe enthaltend ein durch Sprühtrocknung von wäßrigen Polymerisatdispersionen gemäß den Ansprüchen 1 bis 7 erhältliches Polymerisatpulver.

**Claims**

**1.** An aqueous polymer dispersion which contains one or more polymers obtainable by free radical polymerization and, based on the one or more polymers,

a) from 0.5 to 3% by weight of at least one polyether (dispersant a) composed of ethylene oxide and propylene oxide,
b) from 0.5 to 4% by weight of at least one ethoxylated alkylphenol and/or ethoxylated fatty alcohol (dispersant b),
c) from 0.5 to 3% by weight of at least one ethoxylated polysaccharide (dispersant c) and
d) from 0 to 4% by weight of one or more compounds selected from the group consisting of sulfuric half-esters of ethoxylated alkylphenols and ethoxylated fatty alcohols and water-soluble salts thereof (dispersant d).

2. An aqueous polymer dispersion as claimed in claim 1, whose polymer is composed of

a) from 70 to 100% by weight of at least one monomer selected from the group consisting of styrene, α-methylstyrene, vinyltoluenes and esters of α,β-monoethylenically unsaturated carboxylic acids of 3 to 6 carbon atoms and alkanols of 1 to 12 carbon atoms (monomers Aa) and
b) from 0 to 30% by weight of other copolymerizable monomers (monomers Ab).

3. An aqueous polymer dispersion as claimed in claim 1, whose polymer is composed of

a) from 50 to 80% by weight of at least one ester of vinyl alcohol and straight-chain alkanecarboxylic acids of 1 to 18 carbon atoms (monomers Ba),
b) from 5 to 40% by weight of at least one ester of vinyl alcohol and branched alkanecarboxylic acids of 1 to 20 carbon atoms (monomers Bb),
c) from 0 to 45% by weight of one or more esters of α,β-monoethylenically unsaturated carboxylic acids of 3 to 6 carbon atoms and alkanols of 1 to 18 carbon atoms (monomers Bc) and
d) from 0 to 5% by weight of other copolymerizable monomers (monomers Bd).

4. An aqueous polymer dispersion as claimed in any of claims 1 to 3, whose dispersant a has a number average molecular weight of from 250 to 20,000 and contains ethylene oxide (EO) and propylene oxide (PO) as polymerized units in a molar ratio EO : PO of from 0.05 to 20.

5. An aqueous polymer dispersion as claimed in any of claims 1 to 4, whose dispersant b is an ethoxylated isooctylphenol having a degree of ethoxylation of from 10 to 50 and/or an ethoxylated fatty alcohol having a degree of ethoxylation of from 8 to 26.

6. An aqueous polymer dispersion as claimed in any of claims 1 to 5, whose dispersant c is ethoxylated cellulose.

7. An aqueous polymer dispersion as claimed in any of claims 1 to 6, whose dispersant comprises no more than dispersants a to d, in a total amount of from 2 to 7% by weight, based on the polymer.

8. A process for the preparation of an aqueous polymer dispersion as claimed in claim 1, wherein a mixture of monomers which are capable of free radical polymerization is polymerized by free radical aqueous emulsion polymerization in the presence of a dispersant and a free radical polymerization initiator, with the proviso that the dispersant is composed of, based on the monomer mixture to be polymerized,

a) from 0.5 to 3% by weight of at least one polyether (dispersant a) composed of ethylene oxide and propylene oxide,
b) from 0.5 to 4% by weight of at least one ethoxylated alkylphenol and/or ethoxylated fatty alcohol (dispersant b),
c) from 0.5 to 3% by weight of at least one ethoxylated polysaccharide (dispersant c) and
d) from 0 to 4% by weight of one or more compounds selected from the group consisting of sulfuric half-esters of ethoxylated alkylphenols and ethoxylated fatty alcohols and the water-soluble salts thereof (dispersant d).

9. The use of an aqueous polymer dispersion as claimed in any of claims 1 to 7, in aqueous or spraydried form, as an additive for mineral binders used as building materials.

10. A mineral binder used as a building material, containing a polymer powder obtainable by spray-drying an aqueous polymer dispersion as claimed in any of claims 1 to 7.

**Revendications**

1. Dispersions aqueuses de polymère, qui contiennent au moins un polymère que l'on peut obtenir par polymérisation radicalaire et, par rapport à ce polymère,

a) 0,5 à 3% en poids d'au moins un polyéther constitué d'oxyde d'éthylène et d'oxyde de propylène (agent dispersif a),
b) 0,5 à 4% en poids d'au moins un alkylphénol éthoxylé et/ou d'un alcool gras éthoxylé (agent dispersif b),

c) 0,5 à 3% en poids d'au moins un polysaccharide éthoxylé (agent dispersif c) et
d) 0 à 4% en poids d'un ou plusieurs composés appartenant au groupe qui englobe les hémiesters de 1' acide sulfurique d'alkylphénols éthoxylés et d'alcools gras éthoxylés, ainsi que leurs sels hydrosolubles (agent dispersif d).

**2.** Dispersion aqueuse de polymère, dont le polymère se compose de

a) 70 à 100% en poids d'au moins un monomère appartenant au groupe qui englobe le styrène, l'α-méthylstyrène, les vinyltoluènes et des esters d'acides carboxyliques α,β-monoéthyléniquement insaturés comportant de 3 à 6 atomes de carbone et d'alcanols comportant de 1 à 12 atomes de carbone (monomères Aa) et
b) 0 à 30% en poids de certains monomères copolymérisables (monomères Ab)

**3.** Dispersion aqueuse de polymère suivant la revendication 1, dont le polymère est constitué de

a) 50 à 80% en poids d'au moins un ester de l'alcool vinylique et d'acides alcanecarboxyliques non ramifiés, présentant de 1 à 18 atomes de carbone (monomères Ba),
b) 5 à 40% en poids d'au moins d'un ester de l'alcool vinylique et d'acides alcanecarboxyliques ramifiés présentant de 1 à 20 atomes de carbone (monomères Bb),
c) 0 à 45% en poids d'un ou plusieurs esters d'acides carboxyliques α,β-monoéthyléniquement insaturés comportant de 3 à 6 atomes de carbone et d'alcanols présentant de 1 à 18 atomes de carbone (monomères Bc) et
d) 0 à 5% en poids de certains monomères copolymérisables (monomères Bd).

**4.** Dispersions aqueuses de polymères suivant les revendications 1 à 3, dont l'agent dispersif a présente un poids moléculaire moyen en nombre de 250 à 20 000 et contient de l'oxyde d'éthylène (OE) et de l'oxyde de propylène (OP) dans le rapport molaire OE:OP de 0,05 à 20, incorporés par polymérisation.

**5.** Dispersions aqueuses de polymères suivant les revendications 1 à 4, dont l'agent dispersif b est de l'isooctylphénol éthoxylé d'un degré d'éthoxylation de 10 à 50 et/ou un alcool gras éthoxylé d'un degré d'éthoxylation de 8 à 26.

**6.** Dispersions aqueuses de polymères suivant les revendications 1 à 5, dont l'agent dispersif c est de la cellulose éthoxylée.

**7.** Dispersions aqueuses de polymères suivant les revendications 1 à 6, dont l'agent dispersif comprend au maximum les agents dispersifs a à d et ceci, par rapport au polymère, en une proportion totale de 2 à 7% en poids.

**8.** Procédé de préparation de dispersions aqueuses de polymères suivant la revendication 1, caractérisé en ce que l'on polymérise un mélange de monomères polymérisables par voie radicalaire selon le procédé de la polymérisation en émulsion aqueuse radicalaire, en présence d'agents dispersifs et d'un amorceur de polymérisation radicalaire, avec la condition en ce que l'agent dispersif se compose, par rapport au mélange des monomères à polymériser, de

a) 0,5 à 3% en poids d'au moins un polyéther constitué d'oxyde d'éthylène et d'oxyde de propylène (agent dispersif a),
b) 0,5 à 4% en poids d'au moins un alkylphénol éthoxylé et/ou d'un alcool gras éthoxylé (agent dispersif b),
c) 0,5 à 3% en poids d'au moins un polysaccharide éthoxylé (agent dispersif c) et
d) 0 à 4% en poids d'un ou plusieurs composés appartenant au groupe qui englobe les hémiesters de 1' acide sulfurique d'alkylphénols éthoxylés et d'alcools gras éthoxylés, ainsi que leurs sels hydrosolubles (agent dispersif d).

**9.** Utilisation de dispersions aqueuses de polymères suivant les revendications 1 à 7, sous forme aqueuse ou sous forme séchée par pulvérisation, à titre d'additifs pour des matériaux de construction liants minéraux.

**10.** Matériaux liants minéraux contenant une poudre de polymère que l'on peut obtenir par le séchage par pulvérisation de dispersions aqueuses de polymères selon les revendications 1 à 7.